# EUROPÄISCHE PATENTSCHRIFT

(11) **EP 0 512 216 B1**
(45) Veröffentlichungstag und Bekanntmachung des Hinweises auf die Patenterteilung: **26.04.1995**
(21) Anmeldenummer: 92103932.7
(22) Anmeldetag: 07.03.1992
(51) Int. Cl.: B60T 8/34

(54) **Fahrzeug mit liftbarer Nachlaufachse**
Vehicle with elevating, self-steering axle
Véhicule avec essieu auto-pivotable rétractable

(30) Priorität: 07.05.1991 DE 4114861
(43) Veröffentlichungstag der Anmeldung: 11.11.1992
(73) Patentinhaber: WABCO Standard GmbH, D-53121 Bonn (DE)
(72) Erfinder: Amtsfeld, Joachim, W-3000 Hannover 1 (DE)
(74) Vertreter: Schrödter, Manfred, Dipl.-Ing.

(56) Entgegenhaltungen:
- EP-A- 0 152 627
- DE-A- 3 101 731
- DE-A- 3 423 508
- DE-A- 3 501 381
- DE-A- 3 700 716

## Beschreibung

Die Erfindung bezieht sich auf ein Fahrzeug mit Liftbarer Nachlaufachse gemäß dem Oberbegriff des Patentanspruchs 1.

Ein Fahrzeug der eingangs genannten Art ist bekannt aus der DE-PS 31 01 731. In dieser Schrift wird eine pneumatische Bremsanlage offenbart, bei welcher bei einem Fahrzeug mit sensierter Antriebsachse, d. h. die Antriebsräder sind mit Drehzahlfühlern versehen, und mit einer nicht-sensierten Nachlaufachse die Bremszylinder der Nachlaufachse druckmäßig seitenweise an die Bremszylinder der Antriebsachse angehängt sind. Während eine Blockierschutz-Regelung läuft, werden die Räder der Nachlaufachse also von den Antriebsrädern mitgesteuert.

Um ein Blockieren der Räder der Nachlaufachse im Regelfalle des Antiblockiersystems mit Sicherheit zu verhindern, ist deren Druckniveau durch ein zwischengeschaltetes Reduzierventil abgesenkt. Durch diese Maßnahme werden also die Räder der Nachlaufachse unterbremst. Der hierdurch geringfügig längere Bremsweg wird im Interesse von Fahrzeugstabilität und Reifenschonung in Kauf genommen.

Bei einem Nutzfahrzeug mit liftbarer Nachlaufachse verschleißen normalerweise die Bremsbeläge an den Rädern der Nachlaufachse bedeutend langsamer als die Beläge der übrigen Räder, da die Beläge der Nachlaufachse im gelifteten Zustand nicht abgenutzt werden. Ein solcher Unterschied im Abnutzungsgrad der Bremsbeläge ist jedoch betriebstechnisch nicht erwünscht, da es rationeller ist, bei einem Werkstattaufenthalt des Fahrzeugs alle Bremsbeläge gleichzeitig zu wechseln.

Der Erfindung liegt die Aufgabe zugrunde, bei einem Fahrzeug mit liftbarer Nachlaufachse eine in etwa gleichmäßige Abnutzung aller Bremsbeläge zu gewährleisten.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert. Diese zeigt in vereinfachter, schematischer Darstellung den pneumatischen und elektronischen Teil eines Fahrzeugs mit Antiblockiersystem (ABS), Antriebsschlupfregelung (ASR) und liftbarer Nachlaufachse. Das Fahrzeug besitzt drei Achsen, wobei die Vorderachse mit (1), die Antriebsachse mit (2) und die liftbare Nachlaufachse mit (3) bezeichnet ist. Den Rädern der Vorderachse (1) sind Federspeicher-Bremszylinder (14, 14') zugeordnet. Diese sind an sogenannte Modulatoren (8, 8') angeschlossen. Die Modulatoren sind an einen Druckluftvorrat (13) angeschlossen. Die Drehzahl der Räder der Vorderachse (1) wird mittels Drehzahlsensoren (10, 10') abgetastet. Die Modulatoren (8, 8') enthalten einen E/P-Wandler, welcher einen elektrisch vorgegebenen Bremsdruck pneumatisch nachbilden kann.

Die Modulatoren (8, 8') enthalten auch einen Elektronikteil. An diesen sind die Drehzahlsensoren (10, 10') angeschlossen. Über eine Datenleitung (24) sind die Modulatoren (8, 8') mit einer elektronischen Zentraleinheit (ZE) (5) verbunden, die für die Vorderachse (1) zuständig ist. Diese ist mit einer weiteren Zentraleinheit (6) verbunden, welche für die Regelung der Antriebsachse (2) zuständig ist. Hierzu ist diese mit einer Datenleitung (25) mit Modulatoren (9, 9') verbunden. An die Zentraleinheit (6) ist weiter über eine weitere Datenleitung (26) eine weitere Zentraleinheit (7) angeschlossen.
Diese ist hauptsächlich für die Steuerung eines Anhängers zuständig, welcher über einen Anschluß (23) angeschlossen werden kann.

Über eine Datenleitung (22) ist die Zentraleinheit (6) weiter mit einem Proportionalventil (19) verbunden (siehe unten).

An beide Zentraleinheiten (5, 6) ist ein Bremswertgeber (4) angeschlossen. Dieser wird vom Fahrer betätigt und gibt dessen Bremskommando über eine Leitung (27) an die genannten Zentraleinheiten (5, 6).

Sowohl die Elektronik-Teile der Modulatoren als auch die Zentraleinheiten sind mit einem oder mehreren Mikrocomputern versehen. Es handelt sich hier um eine elektrische Bremsanlage mit "verteilter Intelligenz".

Die bereits genannten Modulatoren (9, 9') werden ebenfalls vom Druckluftvorrat (13) gespeist. Sie dienen zur Einstellung des Bremsdruckes in den Bremszylindern (15, 15') der Räder der Antriebsachse (2). Die Bremszylinder (15, 15') sind ebenfalls als Federspeicher ausgebildet. Die pneumatischen Anschlüsse für den Federspeicherteil (Feststellbremse) sind der Einfachheit halber nicht dargestellt.

An den Elektronikteil der Modulatoren (9, 9') sind Drehzahlsensoren (11, 11') für die Räder der Antriebsachse angeschlossen.

Die Räder der Nachlaufachse (3) sind mit Bremszylindern (16, 16') ohne Federspeicheranteil versehen. Ihre Drehzahl wird mit zusätzlich vorhandenen Drehzahlsensoren (12, 12') abgetastet.

Die genannten Drehzahlsensoren der Nachlaufachse sind über eine Leitung (21) an den Elektronikteil des Proportionalventils (19) angeschlossen und sind damit über die Datenleitung (22) mittelbar auch mit den Zentraleinheiten (5, 6, 7) verbunden. Die Bremszylinder (16, 16') der Nachlaufachse sind an Zweiwegeventile (18, 18') angeschlossen. Diese Ventile lassen jeweils den größeren anstehenden Druck zu den Bremszylindern durch. Die rechte Seite der Ventile (18, 18') sind an den Ausgang des Proportionalventils (19) angeschlossen. Die linke Seite der Ventile (18, 18') ist jeweils an den Ausgang eines Select-Low-Ventiles (17, 17') angeschlossen. Diese Select-Low-Ventile lassen jeweils den niedrigeren anstehenden Druck durch.

Die genannten Select-Low-Ventile (17, 17) sind einerseits angeschlossen an die Ausgänge der Modulatoren (9, 9'). Andererseits besteht ein Anschluß über ein 3/2-Wegeventil (20) an den Druckluftvorrat (13).

Das dargestellte Druckluft-Bremssystem mit ABS- und ASR-Funktion funktioniert wie folgt.

Im Teilbremsbereich wird die Bremsanforderung des Fahrers vom Bremswertgeber (4) aufgenommen und über die genannten Elektroniken an die Modulatoren (8, 8', 9, 9') weitergeleitet. Diese wandeln das vorgegebene elektrische Signal in einen entsprechenden Druckwert um.

Im normalen Betrieb, also ohne laufende Antriebsschlupfregelung, ist das 3/2-Wegeventil (20) in geöffneter Stellung (wie gezeichnet). Dies hat zur Folge, daß die Select-Low-Ventile (17, 17') die Bremsdrücke der Modulatoren (9, 9') zur Nachlaufachse (3) hin durchlassen. Die Bremsen der Nachlaufachse werden aber gleichzeitig über das Proportionalventil (19) und die Zweiwegeventile (18, 18')beaufschlagt, und zwar mit einem etwa 20 bis 30 Prozent höheren Druck als die Bremsyzlinder der Antriebsachse (2). Der niedrigere Druck der Modulatoren (9, 9') wird von den Zweiwegeventilen (18, 18') abgesperrt. Der höhere Druck wird dem Proportionalventil (19) über die Datenleitung (22) mitgeteilt. Der Druck wird den Bremszylindern (16, 16') über die Zweiwegeventile (18, 18') zugeleitet.

Vorteilhaft ist, daß das Proportionalventil (19) mechanisch für eine niedrigere Frequenz ausgelegt sein kann als die Modulatoren (8, 9), da es nicht ABS-fähig sein muß.

In Sonderfällen kann der Druck an der Nachlaufachse auch noch höher eingestellt werden, z. B. bis zu 50 % Überbremsung.

Falls die Räder der Antriebsachse (2) oder die Räder der Nachlaufachse (3) in einen Schlupfzustand geraten, wird dieses von den zugeordneten Drehzahlsensoren erkannt und den Elektroniken gemeldet. Falls eine Blockierschutz-Regelung anläuft, wird das Proportionalventil (19) über die Leitung (22) auf Entlüftung geschaltet. Über die Zweiwegeventile (18, 18') und die geöffneten Select-Low-Ventile (17, 17') erfolgt jetzt eine Mitsteuerung der Bremszylinder der Nachlaufachse (3) durch den Bremsdruck für die Bremszylinder der Antriebsachse (2). Die Bremsenbestückung an Antriebsachse (2) und Nachlaufachse (3) ist dabei so auszulegen, daß bei gleichen Bremsdrücken die Antriebsachse zuerst Blockierneigung zeigt. Hierdurch wird ein Blockieren der mitgesteuerten Nachlaufachse verhindert. Es erfolgt also eine seitenweise Mitsteuerung.

Im Fall einer Antriebsschlupfregelung (ASR) wird das 3/2-Wegeventil (20) umgesteuert, so daß es in die Sperrstellung gerät. Hierdurch werden die Select-Low-Ventile (17, 18) ebenfalls gesperrt. Die Mitsteuerung der Bremszylinder der Nachlaufachse (3) wird hierdurch also unterbunden. Dies ist notwendig, damit bei einer sogenannten Differentialbremsung eines durchdrehenden Antriebsrades das entsprechende Rad der Nachlaufachse nicht mit eingebremst wird. Hierdurch würde sich naturgemäß das Anfahren erschweren.

Bei einer erneuten Teilbremsung schaltet das System wieder in den anfänglichen Zustand zurück, in welchem die Räder der Nachlaufachse (3) um 20 bis 30 Prozent überbremst werden.

Die dargestellte Bremsanlage funktioniert natürlich sinngemäß genauso, wenn anstatt einer Nachlaufachse (3) eine Vorlaufachse vorhanden ist. Weiter ist es nicht von Bedeutung, ob das Bremssystem wie hier dargestellt als elektrisches Bremssystem (EBS) mit dezentraler Intelligenz ausgebildet ist, oder ob lediglich ein normales Antiblockiersystem mit zusätzlicher Antriebsregelfunktion vorgesehen ist.

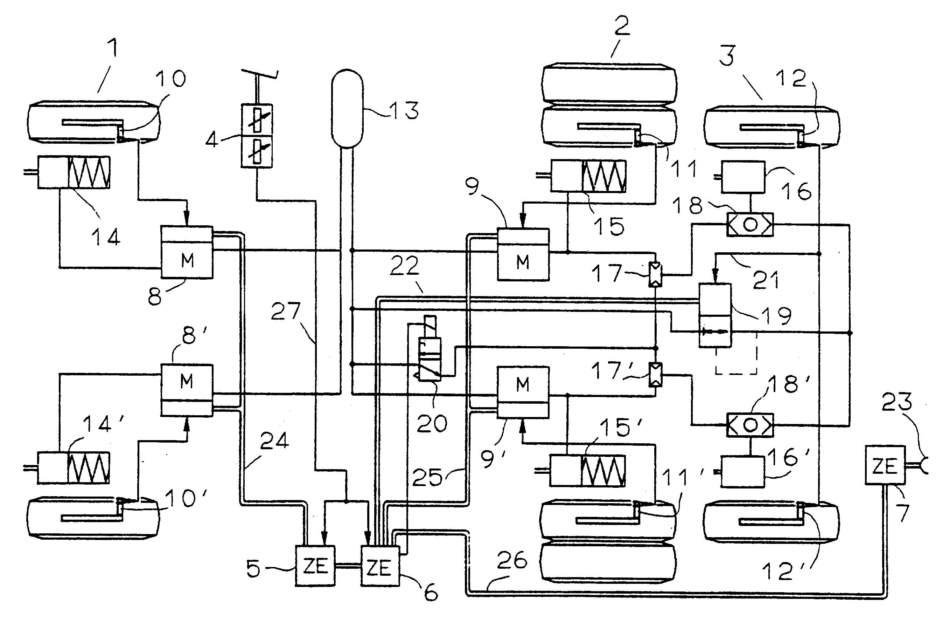

## Patentansprüche

1. Fahrzeug mit liftbarer Nachlaufachse (3), bei dem mindestens die Bremsen (15, 15') der Antriebsachse (2) in ein Antiblockiersystem einbezogen sind,
gekennzeichnet durch die folgenden Merkmale:
a) es sind Mittel vorgesehen, durch welche die Bremsen (16, 16') der Nachlaufachse (3) gegenüber den Bremsen der übrigen Achsen überbremst werden, solange die Räder der Antriebsachse (2) oder der Nachlaufachse (3) nicht in einen bremsbedingten Schlupfzustand geraten;
b) die Räder der Nachlaufachse (3) und der übrigen Achsen (1, 2) sind mit Drehzahlsensoren (10, 10'), (11, 11'), (12, 12') versehen;
c) es ist ein von einer Steuerelektronik (6) steuerbares Ventil (19) vorgesehen, durch welches die Bremszylinder (16, 16') der Nachlaufachse (3) im Normalbetrieb bzw. Teilbremsbereich mit einem höheren Druck als die Bremszylinder (15, 15') der Antriebsachse beaufschlagbar sind, und das während eines Regelzustandes des Antiblockiersystems den Druck Null aussteuert.
d) dem Ventil (19) wird von einer Elektronik (Zentraleinheit 6) über eine elektrische Verbindungsleitung (22) eine Information über die jeweilige Höhe einer Teilbremsung und über den Regelzustand des Antiblockiersystems mitgeteilt.
e) es sind zusätzliche Ventile (17, 18, 17', 18') vorgesehen, durch welche die Bremszylinder (16, 16') der Nachlaufachse (3) während einer Blockierschutz-Regelung direkt vom Bremsdruck der Bremszylinder (15, 15') der Antriebsachse (2) mitsteuerbar sind.

2. Fahrzeug nach Anspruch 1, dadurch gekennzeichnet, daß das Ventil (19) als Proportionalventil ausgebildet ist und an einen Druckmittelvorrat (13) angeschlossen ist.

3. Fahrzeug nach Anspruch 1, dadurch gekennzeichnet, daß die Überbremsung etwa 25 % beträgt.

4. Fahrzeug nach Anspruch 1 bis 3, dadurch gekennzeichnet, daß die Ventile (17, 17') als Select-Low-Ventile ausgebildet sind.

5. Fahrzeug nach Anspruch 1 bis 4, dadurch gekennzeichnet, daß die Ventile (18, 18') als Zweiwegeventile ausgebildet sind.

6. Fahrzeug nach Anspruch 1 bis 4, dadurch gekennzeichnet, daß ein 3/2-Wege-Magnetventil (20) vorgesehen ist, welches von der Elektronik (Zentraleinheit 6) des Antiblockiersystems so ansteuerbar ist, daß es im Fall einer Antriebsschlupfregelung einen Vorratsdruck (13) von den Select-Low-Ventilen (17, 17') abtrennt und diese damit sperrt.

7. Fahrzeug nach Anspruch 1 bis 5, dadurch gekennzeichnet, daß die Elektronik (Zentraleinheiten 5, 6, 7) des Antiblockiersystems so ausgebildet ist, daß nach Beendigung eines Regelzustandes bei einer erneuten Teilbremsung das Ventil (19) wieder auf den erhöhten Bremsdruck umgesteuert wird.

## Claims

1. A vehicle with a lifting follower axle (3), in which at least the brakes (15, 15') of the driving axle (2) are included in an anti-lock system,
characterized by the following features:
a) means are provided by which the brakes (16, 16') of the follower axle (3) are overbraked compared with the brakes of the remaining axles, as long as the wheels of the driving axle (2) or of the follower axle (3) do not enter a brake-induced state of slip;
b) the wheels of the follower axle (3) and of the remaining axles (1, 2) are provided with speed sensors (10, 10'), (11, 11'), (12, 12');
c) a valve (19) controllable by control electronics (6) is provided, by which the brake cylinders (16, 16') of the follower axle (3) are pressurizable in normal operation or in the partial braking range with a pressure that is higher than the brake cylinders (15, 15') of the driving axle, and which valve during a control state of the anti-lock system delivers zero pressure;
d) information is supplied to the valve (19) about the respective level of a partial braking and about the control state of the anti-lock system by electronics (central unit 6) by way of an electrical connecting line (22);
e) additional valves (17, 18, 17', 18') are provided, by which the brake cylinders (16, 16') of the follower axle (3) are concurrently controllable during an anti-lock control directly by way of the brake pressure of the brake cylinders (15, 15') of the driving axle (2).

2. A vehicle according to claim 1, characterized in that the valve (19) is in the form of a proportional valve and is connected to a pressure medium supply (13).

3. A vehicle according to claim 1, characterized in that the overbraking amounts to about 25%.

4. A vehicle according to any of claims 1 to 3, characterized in that the valves (17, 17') are in the form of "select-low" valves.

5. A vehicle according to any of claims 1 to 4, characterized in that the valves (18, 18') are in the form of two-way valves.

6. A vehicle according to any of claims 1 to 4, characterized in that a 3/2-way electromagnetic valve (20) is provided, which is so controllable by the electronics (central unit 6) of the anti-lock system that in the event of an automatic slip control it disconnects a supply pressure (13) from the select-low valves (17, 17') and thus blocks them.

7. A vehicle according to any of claims 1 to 5, characterized in that the electronics (central units 5, 6, 7) of the anti-lock system are so constructed that after a control state has ended the valve (19) is changed back to the increased brake pressure again on renewed partial braking.

## Revendications

1. Véhicule avec essieu traîné (3) susceptible d'être élevé, lors duquel, au moins les freins (15, 15') de l'axe d'entraînement (2) sont intégrés dans un système d'antiblocage, caractérisé par les caractéristiques suivantes :
a) des moyens sont prévus, grâce auxquels les freins (16, 16') de l'essieu traité (3) sont surfreinés par rapport aux freins des autres essieux, aussi longtemps que les roues de l'essieu d'entraînement (2), ou de l'essieu traîné (3), n'arrivent pas dans un état de glissement conditionné par le freinage ;
b) les roues de l'essieu traîné (3) et des autres essieux (1, 2), sont pourvues de capteurs de vitesse de rotation (10, 10'), (11, 11'), (12, 12') ;
c) il est prévu une vanne (19) susceptible d'être commandée par une électronique de commande (6), grâce à laquelle, les cylindres de frein (16 16'), de l'essieu traîné (3), dans l'exploitation normale ou bien la région de freinage partiel, sont susceptibles d'être sollicités avec une pression plus élevée que les cylindre de frein (15, 15') de l'essieu d'entraînement, et qui, durant un état de régulation du système antibloquant, amène la pression à zéro ;
d) à la vanne (19), d'une électronique (unité centrale 6), par l'intermédiaire d'une ligne de liaison (22) électrique, une information, sur, chaque fois, la hauteur d'un freinage partiel et sur l'état de régulation du système antibloquant, est transmise,
e) des vannes (17, 18 17', 18') additionnelles sont prévues, grâce auxquelles, les cylindres de frein (16, 16') de l'essieu traîné (3), durant une régulation de protection contre le blocage, sont susceptibles d'être commandés directement à l'aide de la pression de freinage des cylindres de frein (15, 15') de l'essieu d'entraînement (2).

2. Véhicule selon la revendication 1, caractérisé en ce que la vanne (19) est constituée comme vanne proportionnelle et est raccordée à une réserve de milieu de pression (13).

3. Véhicule selon la revendication 1, caractérisé en ce que le surfreinage atteint à peu près 25 %.

4. Véhicule selon les revendications 1 à 3, caractérisé en ce que les vannes (17, 17') sont constituées comme des vannes de sélection basse.

5. Véhicule selon les revendications 1 à 4, caractérisé en ce que les vannes (18, 18') sont constituées comme des vannes à deux voies.

6. Véhicule selon les revendications 1 à 4, caractérisé en ce qu'une vanne magnétique à 3/2 voies (20) est prévue, laquelle est susceptible d'être ainsi commandée par l'électronique (unité centrale 6) du système antibloquant, que, dans le cas d'une régulation de glissement d'entraînement, elle sépare une pression de réserve (13) des vannes de sélection basse (17, 17') et, avec cela, isole celles-ci.

7. Véhicule selon les revendications 1 à 5, caractérisé en ce que l'électronique (unités centrales 5, 6, 7) du système antibloquant est ainsi constituée, que, après terminaison d'un état de régulation, lors d'un freinage partiel renouvelé, la vanne (19) est à nouveau inversée sur la pression de freinage accrue.
